Europäisches Patentamt

(19) European Patent Office

Office européen des brevets

(11) Numéro de publication: **0 064 912**
**A1**

# (12) DEMANDE DE BREVET EUROPEEN

(21) Numéro de dépôt: **82400766.0**

(22) Date de dépôt: **28.04.82**

(51) Int. Cl.³: **G 02 F 1/17**

(30) Priorité: **30.04.81 FR 8108690**

(43) Date de publication de la demande:
**17.11.82 Bulletin 82/46**

(84) Etats contractants désignés:
**AT BE CH DE GB IT LI LU NL SE**

(71) Demandeur: **JAEGER**
**2, rue Baudin**
**F-92303 Levallois-Perret(FR)**

(72) Inventeur: **Pompei Katz de Warrens, Jean**
**7, résidence de la Gaillarderie**
**F-78590 Noisy-le-Roi(FR)**

(74) Mandataire: **Corre, Jacques Denis Paul et al,**
**Cabinet Regimbeau 26, Avenue Kléber**
**F-75116 Paris(FR)**

(54) Electrode perfectionnée pour cellules d'affichage électrolytique et son procédé de fabrication.

(57) La présente invention concerne une électrode perfectionnée pour cellules d'affichage électrolytique et son procédé de fabrication.

L'électrode selon l'invention comporte une couche externe de nucléation réalisée en une matière semi-conductrice présentant, au voisinage de sa surface libre, une pluralité de centres de nucléation constitués par des atomes métalliques qui sont non solubles au cours des réactions de dissolution assurant l'effacement, et qui présentent une faible diffusivité dans ladite matière semi-conductrice.

EP 0 064 912 A1

1

ELECTRODE PERFECTIONNEE POUR CELLULES D'AFFICHAGE
ELECTROLYTIQUE ET SON PROCEDE DE FABRICATION.

La présente invention concerne une électrode
perfectionnée pour cellules d'affichage électrolytique du type à écriture par dépôt d'une couche
métallique et à effacement par dissolution de ladite
couche, ainsi qu'un procédé pour la fabrication d'une
telle électrode.

Les cellules d'affichage électrolytique connues
à ce jour sont habituellement constituées par un électrolyte à base d'ions métalliques qui baigne une paroi
revêtue d'une électrode semi-conductrice transparente
affectant une forme adaptée à l'affichage ainsi qu'une
contre-électrode. L'électrode et la contre-électrode
sont couplées à des moyens d'alimentation électriques,
en vue de provoquer, par réaction électrochimique à
partir des ions métalliques de l'électrolyte, le dépôt
ou la dissolution d'une couche métallique sur ladite
électrode.

Les électrodes de ce type actuellement utilisées
ne donnent pas satisfaction dans la pratique, principalement en raison de l'apparition de réactions secondaires parasites se produisant au niveau de l'électrode
lors du fonctionnement de la cellule, sous l'effet de
phénomènes de surtension. Une telle surtension observée
sur les électrodes semi-conductrices est due à la
différence entre le niveau de bande plate (niveau de
Fermi) et le niveau de la bande de conduction dans le
semi-conducteur. La différence de potentiel entre l'électrode et l'électrolyte s'établit à travers une double
couche, zone de raccordement entre l'électrolyte et
l'électrode. Elle représente l'écart entre les niveaux
de Fermi respectifs de l'électrolyte et de l'électrode.
Le courant d'électrolyse doit donc passer du niveau de Fermi du semi-conducteur à celui de sa bande de conduction, ou de son niveau donneur dans le cas où le semi-conducteur est dopé N, à la faveur d'une surtension.

En cours de fonctionnement de la cellule, lors d'une opération d'écriture, lorsqu'un dépôt métallique continu s'établit, il y a alignement des niveaux de Fermi du métal et du semi-conducteur ; la surtension disparaît. On sait que le choix d'une électrode semi-conductrice à surtension élevée, comme par exemple l'oxyde d'étain, favorise une croissance en gros grains donnant lieu à un dépôt métallique optiquement absorbant.

La présente invention a pour but de mettre au point une électrode perfectionnée donnant lieu à un dépôt possédant les mêmes propriétés, mais ne nécessitant précisément pas de surtension responsable d'autres inconvénients majeurs.

Conformément à la présente invention, l'électrode perfectionnée comporte une couche externe de nucléation réalisée en une matière semi-conductrice qui présente, au voisinage de sa surface libre, une pluralité de centres de nucléation constitués par des atomes métalliques qui sont non solubles au cours des réactions de dissolution assurant l'effacement, et qui présentent une faible diffusivité dans ladite matière semi-conductrice. Une telle électrode permet d'obtenir un certain nombre d'avantages décisifs parmi lesquels on mentionnera :

- la suppression des phénomènes de surtension, ce qui permet d'obtenir un bon comportement des cellules d'affichage électrolytique aux basses températures ;

- la diminution de la quantité d'électricité nécessaire à l'opération d'écriture ;

- des vitesses de commutation plus grandes, et

- un processus d'élaboration facilité d'un tel type de cellule électrolytique d'affichage.

D'autres caractéristiques et avantages de la
présente invention apparaîtront à la lecture de la
description détaillée de l'invention faite ci-après.

L'électrode objet de la présente invention comporte
une couche externe de nucléation réalisée en une matière
semi-conductrice présentant, dans une zone limitée au voisinage de sa surface libre, une pluralité de centres de nucléation
constitués par des atomes métalliques destinés à assurer
l'alignement des niveaux de Fermi du métal et du semi-
conducteur. Afin de permettre le fonctionnement d'une telle
électrode au sein d'une cellule d'affichage électrolytique,
il est indispensable de faire appel à des atomes métalliques non solubles au cours des réactions de dissolution
assurant l'effacement de l'affichage, et présentant une
faible diffusivité au sein de ladite matière semi-conductrice. On choisit tout d'abord des atomes métalliques non
solubles dans les réactions de dissolution dans le but
de stabiliser le comportement de la cellule d'affichage
électrolytique au cours du temps. Par ailleurs, l'implantation des centres de nucléation doit être sensiblement
limitée à une zone voisine de la surface libre de la
couche externe semi-conductrice de manière à ne pas venir
dégénérer le semi-conducteur, sinon le dépôt métallique
se ferait également sur le semi-conducteur.

Il est clair que pour obtenir un dépôt métallique
optiquement absorbant qui donne entière satisfaction
dans la pratique, il est important d'observer une répartition au moins sensiblement uniforme des atomes métalliques à la surface de l'électrode. De surcroît, la
densité des centres de nucléation doit être choisie de
manière suffisamment élevée pour que les grains du
dépôt métallique qui croissent à partir de ces centres de nucléation se rejoignent bien avant l'apparition de phénomènes de surtension. D'autre part, cette densité doit être suffisamment faible pour que la croissance en gros grains ait lieu et que la transmission initiale n'en soit pas altérée.

Dans la pratique, on a constaté que ces centres de nucléation peuvent par exemple être avantageusement constitués par des atomes de platine ou d'or. D'autres métaux tels que le tantale, le titane, l'antimoine, le bismuth, le cadmium et le zinc peuvent cependant également être utilisés. En tout état de cause, les métaux choisis pour constituer les centres de nucléation doivent être sélectionnés uniquement en fonction des critères de type N ou de type P de la matière semi-conductrice de la couche externe de nucléation, en fonction de la transparence optique et de la conductibilité électrique ainsi que de la compatibilité du processus d'élaboration.

Dans le cas d'une électrode revêtue ou entièrement réalisée à l'aide d'une matière semi-conductrice de type N, les centres de nucléation seront avantageusement constitués par des atomes de platine. En revanche, dans le cas d'une électrode revêtue ou entièrement réalisée à l'aide d'une matière semi-conductrice de type P, les centres de nucléation seront de préférence constitués par des atomes d'or. Le choix particulier de ces métaux a été en particulier arrêté en raison de leur potentiel électrochimique élevé et de leur faible diffusivité au sein de la matière semi-conductrice du type respectif considéré.

L'électrode proprement dite peut être réalisée en une matière métallique, semi-métallique ou semi-conductrice. Dans le cas d'une électrode entièrement réalisée en une matière semi-conductrice, il n'est pas nécessaire d'appliquer une couche externe de nucléation, étant donné que la peau de l'électrode semi-conductrice constituera elle-même la couche de nucléation sur laquelle seront implantés les centres de nucléation.

La présente invention concerne également un procédé de fabrication d'une électrode perfectionnée du type précédemment décrit.

Conformément à la présente invention, on implante dans une zone limitée au voisinage de la surface libre de la couche externe semi-conductrice de l'électrode, une pluralité d'atomes métalliques, avec une répartition au moins sensiblement uniforme et une densité convenable.

Selon un mode de réalisation particulier de la présente invention, pour assurer l'implantation de ces centres de nucléation, on dépose par pulvérisation un voile métallique continu sur la surface libre de l'électrode, et l'on réalise une gravure ionique dudit voile métallique ainsi qu'une opération de recuit.

Dans le cas particulier d'une électrode revêtue ou entièrement réalisée à l'aide d'une matière semi-conductrice de type N même fortement dopée, comme l'oxyde d'indium-étain, on assurera par exemple le dépôt d'un voile continu de platine au cours d'une opération de pulvérisation de l'électrode. Ce voile de platine déposé au cours de l'opération de pulvérisation présente une épaisseur inférieure à environ 10 Å. Puis, on réalise une opération de recuit, par exemple un recuit sous vide à 450°C et l'on effectue une légère érosion ionique sous argon. Dans de telles conditions opératoires, on limite la diffusion des centres de nucléation, à savoir des atomes de platine au cours de l'opération de recuit au sein de la matière semi-conductrice.

Une telle électrode à base d'oxyde d'indium-étain ou encore d'oxyde d'étain éventuellement dopé à l'antimoine, à la surface de laquelle sont implantés des centres de nucléation constitués par des atomes de platine, a été utilisée dans la pratique d'une façon tout à fait satisfaisante en association avec un électrolyte à base d'ions argent. Au cours de l'opération d'affichage, on observe dès le commencement du dépôt d'argent une croissance granulaire qui donne rapidement naissance à un dépôt absorbant en couche mince, d'une épaisseur de l'ordre de 50 Å, parfaitement absorbant du point de vue optique. On obtient ainsi, sans apparition de phénomènes de surtension, un affichage d'excellente qualité. La présence des centres de nucléation permet de conserver le matériau semi-conducteur, tel que l'oxyde d'étain, comme couche d'interface entre l'électrolyte et l'électrode et elle permet une croissance rapide en gros cristaux du dépôt métallique d'affichage, ce qui permet une chute très importante du temps d'établissement de la surtension qui dans la pratique est même totalement supprimée.

Selon une caractéristique additionnelle de la présente invention, on réalise l'implantation des atomes métalliques, avec une répartition au moins sensiblement uniforme et une densité convenable, par réduction de surface d'au moins un des constituants de la couche externe semi-conductrice de nucléation. Une telle opération de réduction peut être obtenue par recuit sous vide ou encore sous une atmosphère d'hydrogène plus ou moins dilué dans l'azote.

Pour réaliser l'implantation de centres de nucléation constitués par des atomes de platine sur un substrat oxyde d'indium-étain, on peut par exemple opérer de la manière suivante.

On dépose un voile de platine discontinu et uniforme. Pour ce faire on joue à la fois sur la vitesse de pulvérisation et la diffusion dans l'espace interélectrode, des atomes pulvérisés.

Pour obtenir une couche de 100 $\overset{\circ}{A}$ de platine à une distance interélectrode de 50 mm, il faut un temps de 20 secondes pour une puissance de HF de 500 watts appliquée à une cible de 200 mm de diamètre. Pour 2 secondes on obtiendra une couche de 10 $\overset{\circ}{A}$, et si l'on augmente la distance interélectrode de 50 mm à 75 mm, on obtiendra l'objectif souhaité (couche uniformément discontinue).

Dans la pratique on fait précéder ce dépôt d'une couche d'oxyde d'étain dans les mêmes conditions, mais pendant un temps 10 à 60 fois plus grand.

Il convient de noter que la couche de nucléation peut être également constituée par une couche d'oxyde de zinc ou de cadmium, oxyde réductible sous vide.

Pour réaliser l'implantation de centres de nucléation par réduction de surface par recuit sous vide, on peut par exemple opérer de la manière suivante.

On dépose successivement une couche d'oxydes d'indium-étain 80-20 conductrice de 8 000 $\overset{\circ}{A}$ et une couche dite de nucléation d'oxyde d'étain-antimoine (80-20) très fine (du même ordre de grandeur d'épaisseur que dans le cas précédent) et on recuit l'ensemble sous vide 12 heures à 450°C. L'oxyde d'antimoine est réduit en surface.

L'oxyde de bismuth peut être substitué à l'oxyde d'antimoine.

L'implantation des centres de nucléation peut être également réalisée par réduction de surface sous une atmosphère azote + hydrogène. Pour ce faire on procède par chauffage à une température de 200°.

Conformément à la présente invention, il est également possible d'assurer l'implantation des centres de nucléation par dépôt par pulvérisation d'une feuille métallique continue sur la surface libre de l'électrode, puis de réaliser une gravure ionique de cette feuille métallique après une opération de recuit. Dans la pratique, il s'est avéré avantageux d'utiliser cette technique pour réaliser l'implantation d'atomes de tantale et de titane.

La présente invention n'est évidemment pas limitée aux électrodes obtenues par implantation des centres de nucléation conformément au procédé précédemment décrit. En effet, d'autres processus d'implantation d'atomes métalliques au voisinage de la surface libre de l'électrode peuvent également être envisagés. C'est ainsi que, dans le cas où l'on désire implanter par exemple des atomes de tantale à la surface de certaines matières semi-conductrices, il est également possible de déposer de l'oxyde de tantale sur l'électrode, par exemple par oxydation anodique. On a observé dans ce cas que les résidus d'atomes métalliques qui restent présents en surface de l'électrode peuvent être suffisants pour abaisser très notablement le temps d'établissement de la surtension.

Un certain nombre d'autres variantes peuvent être apportées aux électrodes précédemment décrites, sans pour autant sortir du cadre de la présente invention. L'invention s'applique en particulier aussi bien aux électrodes transparentes qu'aux électrodes non transparentes.

## REVENDICATIONS

1/ Electrode perfectionnée pour cellules d'affichage électrolytique du type à écriture par dépôt d'une couche métallique et à effacement par dissolution de ladite couche, caractérisée en ce que l'électrode comporte une couche externe de nucléation réalisée en une matière semi-conductrice présentant, au voisinage de sa surface libre, une pluralité de centres de nucléation constitués par des atomes métalliques qui sont non solubles au cours des réactions de dissolution assurant l'effacement, et qui présentent une faible diffusivité dans ladite matière semi-conductrice.

2/ Electrode selon la revendication 1, caractérisée en ce que lesdits atomes métalliques sont choisis parmi le platine, l'or, le tantale, le titane, l'antimoine, le bismuth, le cadmium et le zinc.

3/ Electrode selon l'une des revendications 1 et 2, caractérisée en ce que ladite matière semi-conductrice est un semi-conducteur de type N, et en ce que les centres de nucléation sont constitués par des atomes de platine.

4/ Electrode selon l'une des revendications 1 et 2, caractérisée en ce que ladite matière semi-conductrice est un semi-conducteur de type P, et en ce que les centres de nucléation sont constitués par des atomes d'or.

5/ Electrode selon l'une des revendications 1 à 4, caractérisée en ce que les centres de nucléation sont répartis, de façon tout à fait uniforme, au voisinage de la surface libre de l'électrode et avec une densité suffisamment élevée pour supprimer l'apparition de phénomènes de surtension et suffisamment faible pour permettre une croissance régulière en gros grains du dépôt métallique optiquement absorbant en vue d'assurer l'écriture.

6/ Procédé de fabrication d'une électrode selon l'une des revendications 1 à 5, caractérisé en ce que l'on implante, au voisinage de la surface libre de la couche externe semi-conductrice de l'électrode, une pluralité d'atomes métalliques avec une répartition au moins sensiblement uniforme et une densité convenable.

7/ Procédé selon la revendication 6, caractérisé en ce que, pour assurer l'implantation des centres de nucléation, on dépose par pulvérisation un voile métallique continu sur la surface libre de l'électrode, et l'on réalise une gravure ionique dudit voile métallique après une opération de recuit.

8/ Procédé selon la revendication 6, caractérisé en ce que l'on assure l'implantation de ladite pluralité d'atomes métalliques par réduction de surface d'au moins un des constituants de la couche externe semi-conductrice de nucléation.

9/ Procédé selon la revendication 8, caractérisé en ce que ladite réduction de surface est obtenue par une opération de recuit sous vide.

10/ Procédé selon la revendication 8, caractérisé en ce que ladite réduction de surface est obtenue par une opération de recuit sous atmosphère d'hydrogène plus ou moins dilué dans l'azote.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 408 158  (AMERICAN CYANAMID) <br> * Page 7, lignes 19-25 * | 1,2 | G 02 F    1/17 |
| | --- | | |
| A | FR-A-2 407 746  (C.E.A.) <br> * Revendication 1 * | 1 | |
| | --- | | |
| A | US-A-3 940 323  (E.H. COOK) <br> * Colonnes 1,2 * | 1 | |
| | ----- | | |

DOMAINES TECHNIQUES
RECHERCHES (Int. Cl. ³)

G 02 F    1/17
C 25 D    5/34
C 25 D    5/54

Le présent rapport de recherche a été établi pour toutes les revendications

| Lieu de la recherche <br> LA HAYE | Date d'achèvement de la recherche <br> 10-08-1982 | Examinateur <br> BORMS F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82